# EUROPEAN PATENT SPECIFICATION

(11) **EP 4 064 611 B1**
(45) Date of publication and mention of the grant of the patent: **12.11.2025**
(21) Application number: 22162699.7
(22) Date of filing: 17.03.2022
(51) Int. Cl.: H04L 9/40, H04W 12/03, H04W 12/06, H04W 84/12

(54) **COMMUNICATION APPARATUS, COMMUNICATION METHOD, PROGRAM, AND STORAGE MEDIUM**
KOMMUNIKATIONSVORRICHTUNG, KOMMUNIKATIONSVERFAHREN, PROGRAMM UND SPEICHERMEDIUM
APPAREIL DE COMMUNICATION, PROCÉDÉ DE COMMUNICATION, PROGRAMME ET SUPPORT D'ENREGISTREMENT

(30) Priority: 24.03.2021 JP 2021050080
(43) Date of publication of application: 28.09.2022
(73) Proprietor: Canon Kabushiki Kaisha, Ohta-ku Tokyo 146-8501 (JP)
(72) Inventor: YAMAKAWA, Yuichi, Ohta-ku, 146-8501 (JP)
(74) Representative: Canon Europe Limited

(56) References cited:
- EP-A1- 3 952 433
- WO-A1-2020/203190
- CN-A- 111 356 209
- KUMARI GOOGLE W GEORGE TIME WARNER CABLE W: "OWE: Opportunistic Wireless Encryption; draft-wkumari-owe-01.txt", OWE: OPPORTUNISTIC WIRELESS ENCRYPTION; DRAFT-WKUMARI-OWE-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 20 August 2015 (2015-08-20), pages 1 - 10, XP015107883

## Description

### BACKGROUND OF THE INVENTION

### Field of the Invention

The present invention relates to a communication apparatus that performs wireless communication.

### Description of the Related Art

In the advancement of wireless local area network (WLAN) techniques, standardization by Wi-Fi Alliance that assures interconnection in the WLAN techniques has played an important role.

The communication apparatus discussed in Japanese Patent Application Laid-Open No. 2012-89926 performs authentication by Wi-Fi Protected Access (WPA)/WPA2, which are authentication programs provided by Wi-Fi Alliance. On the other hand, there is also a conventional scheme that does not require a user to enter a password, called Open, in which communication can be performed without authentication or encryption.

In addition, Wi-Fi Alliance has released a new security scheme called Wi-Fi Enhanced Open in which encrypted communication can be performed based on Opportunistic Wireless Encryption (OWE) without a user entering a password.

In addition to conventional Open, Wi-Fi Enhanced Open in which encrypted communication can be performed without a user entering a password has been included as a security scheme that does not require a user to enter a password. Thus, in a case where the user selects a security scheme that does not require a user to enter a password, the user is asked to further select between Open and Wi-Fi Enhanced Open. This may impair user convenience.

Chinese patent application publication no. CN111356209 describes a method, device, storage medium and electronic device for opening a multi-frequency WiFi hotspot. The method comprises: receiving a hotspot turn-on instruction, acquiring a plurality of hotspot frequency bands supported by the terminal, creating hotspot configuration files respectively corresponding to the plurality of hotspot frequency bands, wherein the hotspot configuration file comprises hotspot configuration information, configuring a frequency band port of each hotspot frequency band based on the hotspot configuration information corresponding to the plurality of hotspot frequency bands, and opening the frequency band port of each hotspot frequency band.

PCT patent application publication no. WO2020/203190 describes a communication device conforming to a standard of a IEEE 802.11 series which determines one or more frequency bands that the communication device can use for communication, generates a frame in which information of the determined one or more frequency bands is included, and transmits the generated frame. The frame includes a Multi-band element for notifying the information of the determined one or more frequency bands, and the information indicating the determined one or more frequency bands is included in a Band ID field for identifying the frequency band in the Multi-band element. The determined one or more frequency bands include a 6 GHz band.

A document entitled "OWE: Opportunistic Wireless Encryption draft-wkumari-owe-01" by W. Kumari, W. George, 20 August 2015, Internet Engineering Task Force, IETF, Internet-Draft, describes a method to incrementally increase the security of wireless networks against passive attackers/pervasive monitors through unauthenticated encryption. The Executive Summary states this document defines a new, opportunistically encrypted mode for WiFi networks. The SSID will still appear to be open (with no"lock" icon when scanning), but will actually be encrypted using the SSID as the passphrase. Software running on the client will detect that this is an opportunistically encrypted connection and will automatically provide the SSID as the passphrase, providing an encrypted connection without any interaction from the user.

### SUMMARY OF THE INVENTION

The present invention is directed to a communication apparatus that, in a case where the user selects a security scheme that does not require a user to enter a password, switches between security schemes without a user operation, thereby improving user convenience.

According to a first aspect of the present invention, there is provided a communication apparatus as specified in claims 1 to 8. According to a second aspect of the present invention, there is provided a communication method of a communication apparatus as specified in claim 9. According to a third aspect of the present invention, there is provided a program for causing a computer to operate as the communication apparatus as specified in claim 10. According to a fourth aspect of the present invention, there is provided a computer-readable storage medium carrying a program as specified in claim 11.

Further features of the present invention will become apparent from the following description of embodiments with reference to the attached drawings.

### BRIEF DESCRIPTION OF THE DRAWINGS

Fig. 1 is a diagram illustrating a configuration example of a network established by a communication apparatus.
Fig. 2 is a block diagram illustrating a functional configuration example of the communication apparatus.
Fig. 3 is a block diagram illustrating a hardware configuration example of the communication apparatus.
Fig. 4 is a diagram illustrating a display example in which a wireless operation mode is set in a 2.4-gigahertz (GHz) band
Fig. 5 is a diagram illustrating a display example in which the wireless operation mode is set in a 6-GHz band.
Fig. 6 is a flowchart of processing executed by the communication apparatus.
Fig. 7 is a diagram illustrating a display example in which the wireless operation mode is set in the 2.4-GHz band.
Fig. 8 is diagram illustrating a display example in which no password is selected in a case where an extended security mode is available.
Fig. 9 is a flowchart of processing executed by a communication apparatus with the extended security mode.

### DESCRIPTION OF THE EMBODIMENTS

Hereinafter, embodiments of the present invention will be described in detail with reference to the accompanying drawings. The configurations described in the following embodiments are merely examples, and the present invention is not limited to the configurations illustrated in the drawings. The present invention is defined by the appended claims.

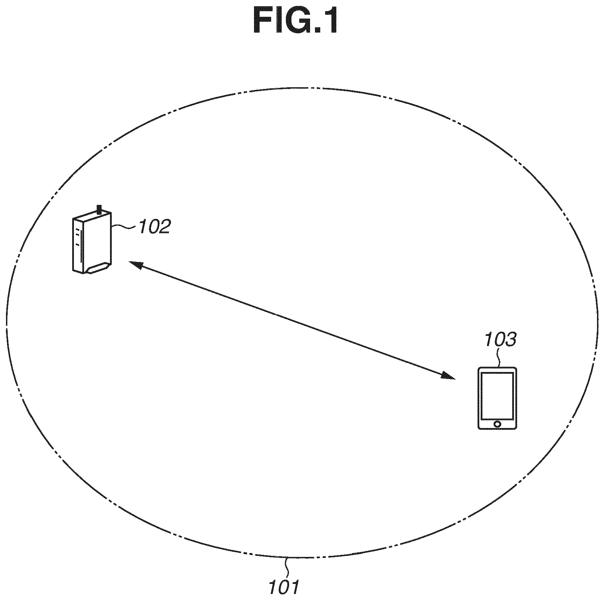

Fig. 1 illustrates a configuration example of a network established by an access point (AP) 102 according to the embodiments. The AP 102 is a communication apparatus that has the role of establishing a network 101. The network 101 is a wireless network. The AP may be a printer, camera, projector, smartphone, mobile/portable device, computer or similar device. In other words, the AP may be any communication apparatus capable of communication (e.g. wireless communication) and establishing a network 101.

A station (STA) 103 is a communication apparatus that has the role of participating in the network 101. The STA 103 is compliant with Institute of Electrical and Electronics Engineers (IEEE) 802.1 1be Extremely High Throughput (EHT) standards and can execute wireless communication in conformity with IEEE802.11be standards via the network 101.

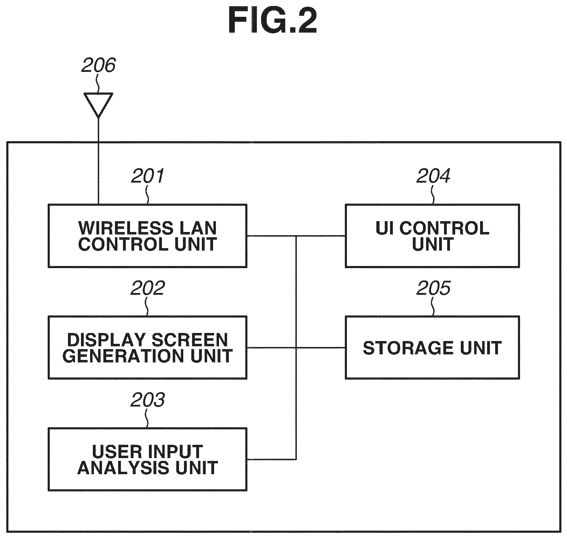

Fig. 2 illustrates a functional configuration example of the AP 102. The AP 102 includes a wireless local area network (LAN) control unit 201, a display screen generation unit 202, a user input analysis unit 203, a user interface (UI) control unit 204, a storage unit 205, and an external wireless detection unit 206.

The wireless LAN control unit 201 includes an antenna and a circuit for transmitting and receiving wireless signals to and from another wireless LAN apparatus, and programs for controlling the antenna and the circuit. The wireless LAN control unit 201 executes wireless LAN communication control in conformity with IEEE 802.11 standard family. The AP 102 includes the wireless LAN control unit 201. In the embodiments, the number of wireless LAN control units is one, but the number thereof is not limited thereto.

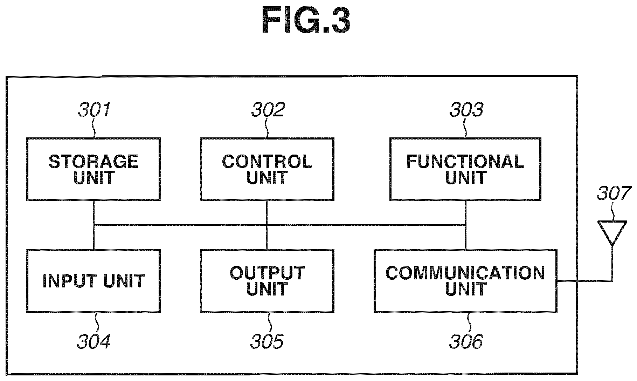

The UI control unit 204 includes hardware relating to a user interface such as a touch panel or buttons for accepting operations on the AP 102 performed by a user of the AP 102, and a program for controlling the hardware. By the program in the UI control unit 204, user inputs obtained via an input unit 304 illustrated in Fig. 3 are sent to the user input analysis unit 203, and images generated by the display screen generation unit 202 are sent to an output unit 305 illustrated in Fig. 3. Besides, the UI control unit 204 has a function of presenting information such as audio outputs to the user, for example.

The user input analysis unit 203 receives the information obtained by the UI control unit 204 and analyzes contents of user instructions. Specifically, the user input analysis unit 203 analyzes contents of control to be performed by the wireless LAN control unit 201 and extracts information to be displayed on the display screen generation unit 202. The user input analysis unit 203 sends the extracted information to the display screen generation unit 202.

The display screen generation unit 202 generates contents to be displayed on the UI based on the information received from the user input analysis unit 203 and the information in the storage unit 205, and sends the generated contents to the UI control unit 204. A screen generated by the display screen generation unit 202 may vary depending on the user inputs or with a lapse of time.

The storage unit 205 is a storage device that may include a program on which the AP 102 runs and programs for controlling a read-only memory (ROM), a random-access memory (RAM), and the like that store data.

The external wireless detection unit 206 includes a program for detecting signals transmitted by other wireless systems at specified frequencies. The other wireless systems include, but are not limited to, fixed wireless systems and satellite communication systems. Broadcast communication systems may also be included.

Fig. 3 illustrates a hardware configuration example of the AP 102. The AP 102 includes a storage unit 301, a control unit 302, a functional unit 303, the input unit 304, the output unit 305, a communication unit 306, and a wireless antenna 307.

The storage unit 301 includes both or either of a ROM and a RAM and stores programs for performing various operations described below and various types of information such as communication parameters for wireless communication. As the storage unit 301, instead of memories such as the ROM and the RAM, storage media such as a flexible disk, a hard disk, an optical disk, a magneto-optical disk, a compact disk (CD)-ROM, a CD-recordable (R), a magnetic tape, a non-volatile memory card, and a digital versatile disk (DVD) may be used.

The control unit 302 includes a processor such as a central processing unit (CPU) or a micro processing unit (MPU), an application specific integrated circuit (ASIC), a digital signal processor (DSP), a field programmable gate array (FPGA), or the like. The control unit 302 controls the entire AP 102 by executing the programs stored in the storage unit 301. The control unit 302 may control the entire AP 102 in cooperation with the programs stored in the storage unit 301 and an operating system (OS).

The control unit 302 controls the functional unit 303 to execute predetermined processing such as image capturing, printing, or projection. The functional unit 303 is hardware for the AP 102 to execute the predetermined processing. If the AP 102 is a camera, for example, the functional unit 303 is an imaging unit that performs imaging processing. If the AP 102 is a printer, for example, the functional unit 303 is a printing unit that performs print processing. If the AP 102 is a projector, for example, the functional unit 303 is a projection unit that performs projection processing. The data processed by the functional unit 303 may be data stored in the storage unit 301 or may be data communicated with another communication apparatus (such as another AP 102 or a station such as an STA 103) via the communication unit 306 described below.

The input unit 304 accepts various operations from the user. The output unit 305 provides various outputs to the user. The outputs from the output unit 305 include at least one of display on a screen, audio output from a speaker, vibration output, and the like. Both the input unit 304 and the output unit 305 may be implemented by one module such as a touch panel. The output unit 305 does not need to be mounted in a main body of the AP 102 but may be mounted in another device together with a program for controlling the output unit 305 and providing outputs to the user. Possible output destination media include, but not limited to, a personal computer (PC) or a smartphone connected by wire or wirelessly to the AP 102.

The communication unit 306 controls wireless communication in conformity with IEEE 802.11 standard family or controls Internet Protocol (IP) communication. The communication unit 306 also controls the wireless antenna 307 to transmit and receive wireless signals for wireless communication. The AP 102 communicates content such as image data, document data, and video data with another communication apparatus via the communication unit 306.

The wireless antenna 307 is an antenna that is capable of receiving signals in any of a sub-gigahertz (GHz) band, 2.4-GHz band, 3.6-GHz band, 4.9- and 5-GHz bands, 6-GHz band, and 60-GHz band. The wireless antenna 307 may physically include one or more antennas to implement Multi-Input and Multi-Output (MIMO) transmission and reception.

In a first embodiment, an example of a graphical user interface is described. However, the graphical user interface may not necessarily be provided. The user can input, as settings for activating the AP 102, a network name (service set identifier (SSID)), a wireless operation mode (a wireless LAN standard and a frequency band to be used), a security-related scheme, an encryption key, and the like. Generally, a security-related scheme (also referred to as security scheme) is a scheme for supporting communication with or without encryption and/or with or without authentication. For example, the security-related scheme may use an encryption method and an authentication method (e.g. the security-related scheme requires a user to enter a password) or may use an encryption method but not an authentication method (e.g. the security-related scheme does not require a user to enter a password) or may not use encryption nor authentication. The security-related scheme may include an authentication method such as Wi-Fi Protected Access (WPA)/WPA2/WPA3 and an encryption method.

In the present embodiment, based on a combination of a user-specified frequency band and a user-specified security scheme, the AP 102 switches between encrypted communication and non-encrypted communication at the time of startup of the AP 102.

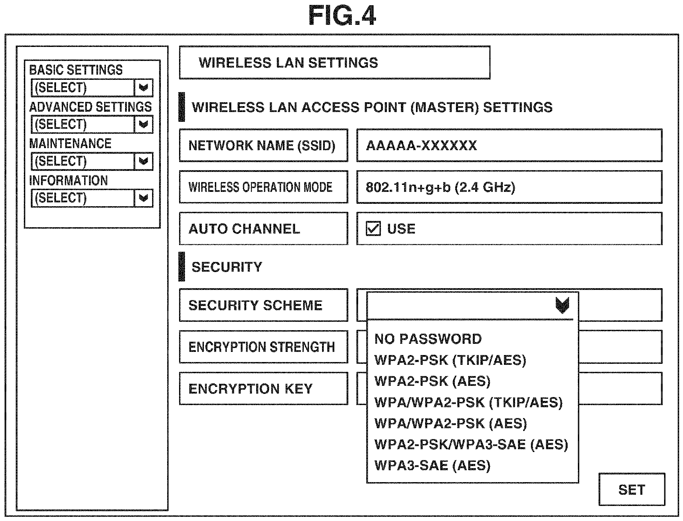

Fig. 4 illustrates a display example in which the wireless operation mode of the AP 102 is set to the 2.4-GHz band by the user. There are two security schemes that do not require a user to enter a password in the 2.4-GHz band, namely, conventional Open without authentication/encryption and Wi-Fi Enhanced Open. Wi-Fi Enhanced Open is a security scheme in which encrypted communication can be performed based on Opportunistic Wireless Encryption (OWE) without a user entering a password. In the present embodiment, however, if the wireless operation mode is set to the 2.4-GHz band and no password is selected, non-encrypted communication is set for enhanced compatibility. In other words, when a first frequency band is selected for operation, such as 2.4-GHz, and when no password is set related to authentication, the AP (e.g. by means of the control unit 302) may select or set the scheme for supporting communication as a security-related scheme without encryption, such as Open.

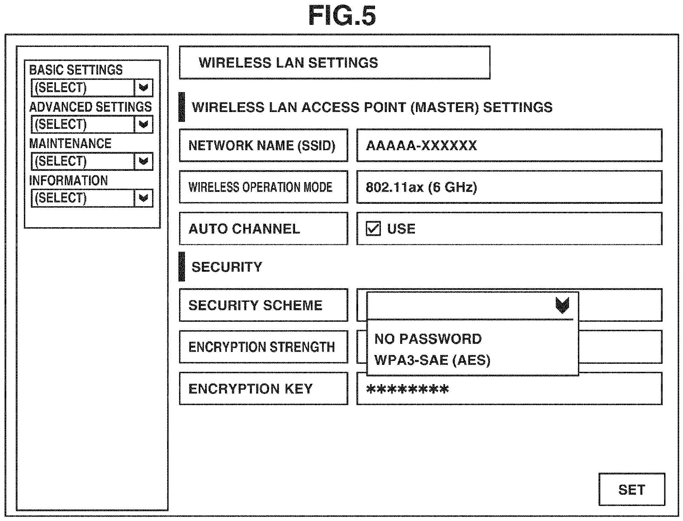

Fig. 5 illustrates a display example in which the wireless operation mode of the AP 102 is set to the 6-GHz band by the user. Since it is essential to perform authentication using WPA3 (not to perform authentication using WPA/WPA2) in the communication in the 6-GHz band, the security scheme illustrated in Fig. 5 may be WPA3. In addition, it is stipulated that no authentication should be performed under Open in the 6-GHz band. Thus, if the wireless operation mode is set to the 6-GHz band and no password is selected, setting of no password illustrated in Fig. 5 means that encrypted communication will be performed based on OWE. In other words, when a second frequency band is selected for operation, such as 6-GHz, the AP (e.g. by means of the control unit 302) may select or set the scheme for supporting communication as a security-related scheme with encryption, such as Wi-Fi Enhanced Open with OWE, if the security-related scheme with encryption not requiring a user to enter a password is selected.

The present embodiment has been described taking the 2.4-GHz band and 6-GHz band as examples. However, the present invention is not limited to these bands. In the 5-GHz band as well, if no password is selected by the user, non-encrypted communication will be set.

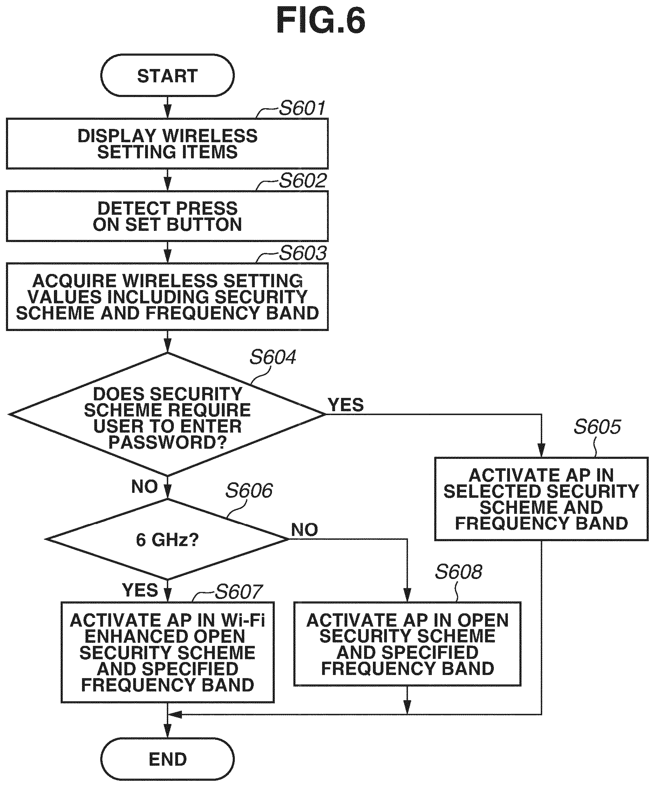

Fig. 6 is a flowchart illustrating a procedure of processing performed by the control unit 302 executing the programs stored in the storage unit 301 of the AP 102. The flowchart illustrates a procedure of processing for the AP 102 to perform a function as the AP with predetermined security settings in the specified frequency band. The processing in the flowchart is started when the AP 102 is powered on.

In step S601, the AP 102 displays AP wireless setting items to the user. For example, the AP may collectively display security-related schemes (requiring and/or not requiring a user to enter a password). The displayed wireless settings may include at least part of the display examples and menus shown in Figs. 4 and 5, such as the drop down menu for the security scheme. The displayed wireless settings may include a list of one or more security-related schemes not requiring a user to enter a password and/or a list of one or more security-related schemes requiring a user to enter a password. When the wireless setting items are displayed, the user inputs the frequency band in which the AP 102 is to operate and the security-related scheme including the authentication method and the encryption method. Then, in step S602, the AP 102 determines that the user has finished inputting the setting items. The AP 102 determines that the user has finished inputting the setting items by detecting a press on a set button. If it is determined in step S602 that the user has finished inputting the setting items, in step S603, the AP 102 acquires wireless setting values including the frequency band and the security-related scheme specified by the user. In step S604, the AP 102 determines whether the input security scheme is a security scheme that requires a user to enter a password based on the wireless setting values acquired in step S603. If it is determined in step S604 that the selected security scheme is a security scheme that requires a user to enter a password (YES in step S604), the processing proceeds to step S605. In step S605, the AP 102 is activated as an access point with the setting values of the security scheme and the frequency band specified by the user.

If it is determined in step S604 that the selected security scheme is a security scheme that does not require a user to enter a password (NO in step S604), the processing proceeds to step S606. In step S606, the AP 102 determines whether the selected frequency band is the 6-GHz band. If it is determined in step S606 that the selected frequency band is the 6-GHz band (YES in step S606), the processing proceeds to step S607. In step S607, the AP 102 sets the security scheme to Wi-Fi Enhanced Open under which encryption is enabled based on OWE, and is activated as an access point in the 6-GHz band. If it is determined in step S606 that the selected frequency band is not the 6-GHz band (NO in step S606), the processing proceeds to step S608. In step S608, the AP 102 sets the security scheme to Open under which non-encrypted communication will be performed, and is activated as an access point in the user-specified frequency band.

As above, in the present embodiment, if the user specifies the security scheme that does not require the user to enter a password, the user can activate the AP while switching between communication using encryption and communication not using encryption depending on the frequency band.

Figs. 4 and 5 illustrates the cases where the frequency band is selected by the wireless operation mode. Alternatively, the frequency band and the security scheme may be associated with each other by another method. Any method can be used as far as it allows for identification of the frequency band to use and identification of the security scheme that does not require a user to enter a password (passphrase) among a plurality of security schemes.

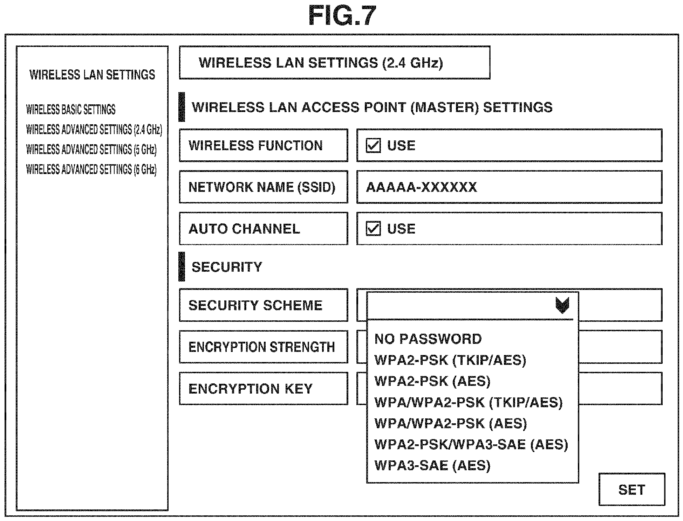

Fig. 7 illustrates an example of UI presented to the user. The frequency band may not be selected by the wireless operation mode as illustrated in Figs. 4 and 5, but the frequency band and the security scheme may be identified in a different setting screen for each frequency band.

In the first embodiment, if no password is specified among the security schemes presented in the UI for general users, the communication device is set to switch between the communication using encryption and the communication not using encryption depending on the frequency band selected by the user. However, some users conversant with security settings may wish to perform the encrypted communication also in the 2.4-GHz band or 5-GHz band, knowing issues of compatibility with conventional authentication methods. In a second embodiment, an extended setting for such a user conversant with security settings will be described.

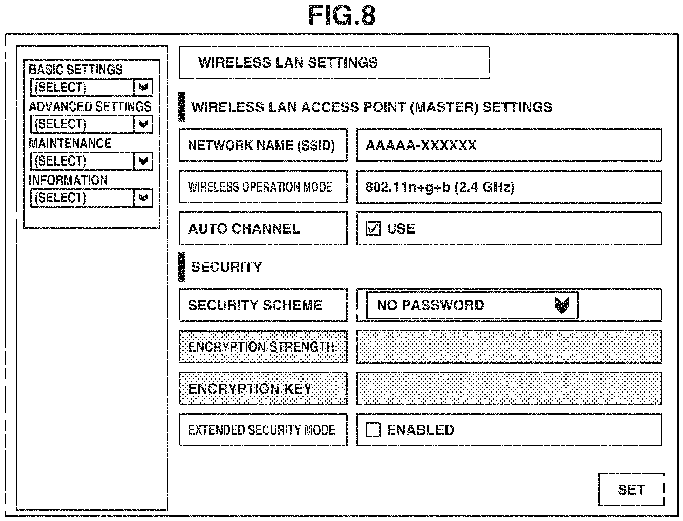

Fig. 8 illustrates an example of setting screen displayed to a user by the AP 102 having an extended security mode. If the user selects the security scheme that does not require a user to enter a password, the AP 102 allows the user to select whether or not to enable the extended security mode. If the extended security mode is enabled, encrypted communication will be performed based on OWE regardless of the setting of the frequency band.

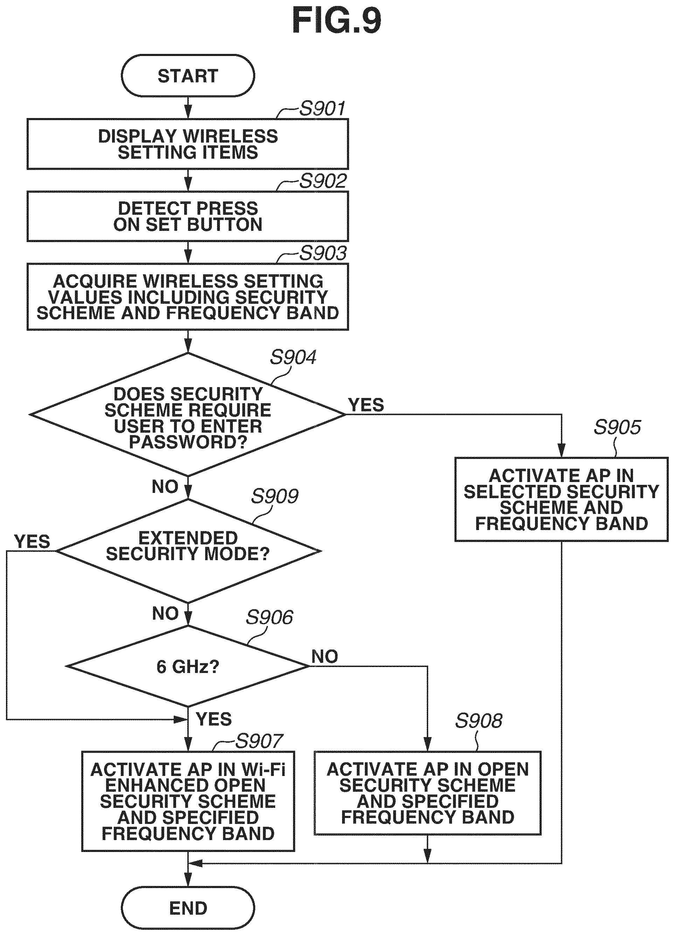

Fig. 9 is a flowchart illustrating a procedure of processing performed by a control unit 302 executing programs stored in a storage unit 301 of the AP 102 having the extended security mode. The flowchart illustrates a procedure of processing for the AP 102 to perform the function as the AP with predetermined security settings in the specified frequency band. The processing in the flowchart is started when the AP 102 is powered on.

Steps S901 to S903 are similar to steps S601 to S603 illustrated in Fig. 6, and thus description thereof will be omitted. In step S904, the AP 102 determines whether the selected security scheme is the security scheme that requires a user to enter a password. If it is determined in step S904 that the security scheme is not the security scheme that requires a user to enter a password (NO in step S904), the processing proceeds to step S909. In step S909, the AP 102 determines whether the extended security mode is enabled. The extended security mode is a mode in which encrypted communication can be performed based on OWE without a user entering a password even in the 2.4-GHz or 5-GHz band. If it is determined in step S909 that the extended security mode is enabled (YES in step S909), the processing proceeds to step S907. In step S907, the AP 102 is set to the encrypted communication and activated as an access point in the user-specified frequency band. If it is determined in step S909 that the extended security mode is disabled (NO in step S909), the processing proceeds to step S906. In step S906, the AP 102 determines whether the selected frequency band is the 6-GHz band. Step S906 and the subsequent steps are similar to the steps in the first embodiment. In addition, the step performed by the AP 102 after it is determined in step S904 that the security scheme is the security scheme that requires a user to enter a password is also similar to the step in the first embodiment, and thus description thereof will be omitted.

As above, in the present embodiment, providing the AP 102 with the extended security mode makes it possible to provide security settings with a high degree of flexibility to users conversant with security settings.

In summary, the control unit 302 executing one or more programs stored in the storage unit 301 provides: a setting means for making a setting related to authentication of the AP (e.g. the setting means makes a setting indicating whether or not a user is required to enter a password based on user inputs such as the user selection of 'No Password' or a security-related scheme with or without an authentication method, as discussed above with respect to steps S603 and S903); selection means for selecting a frequency band in which the AP is to operate (e.g. the selection means selects a frequency band based on user inputs such as the user selection of a frequency band as discussed above with respect to steps S603 and S903); and control means for, in a case where a setting not requiring a user to enter a password is made by the setting means, switching between a first scheme and a second scheme based on the frequency band selected by the selection means. In an example, when a setting relating to authentication is provided to the AP 102 indicating no password is specified (e.g. a user is not required to enter a password), control means of the AP 102 (e.g. the control unit 302) may set the AP to use a first scheme (for example, a security-related scheme which supports non-encrypted communication) or a second scheme which is different to the first scheme (for example, a security-related scheme which supports secure communication (e.g. using an encryption method)) based on a selected frequency band. In an example, when the selected frequency band is a first frequency band (e.g. 2.4-GHz or 5-GHz), the control unit 302 may set the AP 102 to use the first scheme (e.g. supporting communication without encryption). In an example, when the selected frequency band is a second frequency band (e.g. 6-GHz), the control unit 302 may set the AP 102 to use the second scheme (e.g. supporting communication with encryption). If an extended security mode is enabled (i.e. a mode for encrypted communication regardless of the selected frequency band is enabled), the control unit 302 may set the AP 102 to use the second scheme (e.g. supporting communication with encryption) irrespective of the frequency band.

A storage medium storing program codes of software for performing the above-described functions may be supplied to a system or an apparatus, and a computer (a CPU or MPU) in the system or the apparatus may read and execute the program codes stored in the storage medium. In this case, the program codes read from the storage medium implement the above-described functions of the embodiments, and the storage medium storing the program codes constitutes the above-described apparatus.

Examples of the storage medium for supplying the program codes include a flexible disk, a hard disk, an optical disk, a magneto-optical disk, a CD-ROM, a CD-R, a magnetic tape, a non-volatile memory card, a ROM, and a DVD.

In addition, not only the computer executes the read program codes to implement the above-described functions but also the OS running on the computer may execute part or all of the actual processing based on instructions from the program codes to implement the above-described functions. The OS is an abbreviation of operating system.

The program codes read from the storage medium are written into a memory included in a function enhancement board inserted into the computer or a function enhancement unit connected to the computer.

A CPU included in the function enhancement board or the function enhancement unit may perform part or all of the actual processing based on instructions from the program codes to implement the above-described functions.

The present invention can be realized by supplying a program implementing one or more functions of the above-mentioned embodiments to a system or an apparatus via a network or a recording medium and by reading and executing the program by one or more processors in the system or the apparatus. The present invention can also be realized by a circuit (for example, an ASIC) implementing the one or more functions.

In the present invention, if the user selects a security scheme that does not require a user to enter a password, it is possible to switch between security schemes without a user operation, thereby user convenience can be improved.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments and is defined by the accompanying claims.

## Claims

1. An access point, AP, (102) configured to execute communication using a first scheme being a scheme supporting communication without encryption and not requiring a user to enter a password or a second scheme being a security-related scheme supporting communication with encryption and not requiring a user to enter a password, the AP being capable of operating in any of multiple frequency bands, the AP comprising:
setting means for making a setting related to authentication of the AP based on user input;
selection means for selecting a frequency band in which the AP is to operate based on user input; and
control means for, in a case where a setting not requiring a user to enter a password is made by the setting means, setting, without receiving a selection operation between the first scheme and the second scheme, the AP to use one of the first scheme or and the second scheme based on the frequency band selected by the selection means.

2. The AP according to claim 1, wherein, in a case where operation in a first frequency band is selected by the selection means, the control means is configured to set the AP to use the first scheme and execute a function as the AP.

3. The AP according to claim 1 or 2, wherein, in a case where operation in a second frequency band is selected by the selection means, the control means is configured to set the AP to use the second scheme and execute a function as the AP.

4. The AP according to claims 2 and 3, wherein the first frequency band is a 2.4-gigahertz (GHz) band or a 5-GHz band, and the second frequency band is a 6-GHz band.

5. The AP according to any one of claims 1 to 4, wherein, in a case where operation in a security-related scheme requiring a user to enter a password is set by the setting means, the AP is configured to execute the communication based on the security-related scheme set by the setting means.

6. The AP according to any one of claims 1 to 5, wherein the AP is configured to collectively display security-related schemes not requiring a user to enter a password.

7. The AP according to any one of claims 1 to 6, wherein, in the second scheme, the AP performs encryption based on Opportunistic Wireless Encryption, OWE, standards.

8. The AP according to any one of claims 1 to 7, wherein the second scheme is Wi-Fi Enhanced Open.

9. A communication method of an access point, AP, (102) configured to execute communication using a first scheme being a scheme supporting communication without encryption and not requiring a user to enter a password or a second scheme being a security-related scheme supporting communication with encryption and not requiring a user to enter a password, the AP being capable of operating in any of multiple frequency bands, the communication method comprising:
making a setting related to authentication of the AP based on user input;
selecting a frequency band in which the AP is to operate based on user input; and
performing control to, in a case where a setting not requiring a user to enter a password is made in the setting, set, without receiving a selection operation between the first scheme and the second scheme, the AP to use one of the first scheme or the second scheme based on the frequency band selected in the selecting.

10. A program for causing a computer to operate as the AP according to any one of claims 1 to 8.

11. A computer-readable storage medium carrying a program according to claim 10.

## Patentansprüche

1. Zugangspunkt, AP, (102), der konfiguriert ist, Kommunikation auszuführen, und zwar unter Verwendung eines ersten Schemas, das ein Schema ist, das eine Kommunikation ohne Verschlüsselung unterstützt und nicht erfordert, dass ein Benutzer ein Passwort eingibt, oder eines zweiten Schemas, das ein sicherheitsbezogenes Schema ist, das eine Kommunikation mit Verschlüsselung unterstützt und nicht erfordert, dass ein Benutzer ein Passwort eingibt, wobei der AP in der Lage ist, in einem von mehreren Frequenzbändern zu arbeiten, wobei der AP umfasst:
eine Einstelleinrichtung zum Vornehmen einer Einstellung, die sich auf eine Authentifizierung des AP bezieht, basierend auf einer Benutzereingabe;
eine Auswahleinrichtung zum Auswählen eines Frequenzbands, in dem der AP arbeiten soll, basierend auf einer Benutzereingabe; und
eine Steuereinrichtung zum Einstellen des AP ohne Empfangen eines Auswahlvorgangs zwischen dem ersten Schema und dem zweiten Schema, sodass er eines von dem ersten Schema und dem zweiten Schema verwendet, und zwar basierend auf dem durch die Auswahleinrichtung ausgewählten Frequenzband, falls eine Einstellung durch die Einstelleinrichtung vorgenommen wird, die nicht erfordert, dass ein Benutzer ein Passwort eingibt.

2. AP nach Anspruch 1, wobei die Steuereinrichtung konfiguriert ist, falls Arbeiten in einem ersten Frequenzband durch die Auswahleinrichtung ausgewählt wird, den AP einzustellen, das erste Schema zu verwenden und eine Funktion als der AP auszuführen.

3. AP nach Anspruch 1 oder 2, wobei die Steuereinrichtung konfiguriert ist, falls Arbeiten in einem zweiten Frequenzband durch die Auswahleinrichtung ausgewählt wird, den AP einzustellen, das zweite Schema zu verwenden und eine Funktion als der AP auszuführen.

4. AP nach Anspruch 2 und 3, wobei das erste Frequenzband ein 2,4-Gigahertz(GHz)-Band oder ein 5-GHz-Band ist und das zweite Frequenzband ein 6-GHz-Band ist.

5. AP nach einem der Ansprüche 1 bis 4, wobei der AP konfiguriert ist, falls durch die Einstelleinrichtung Arbeiten in einem sicherheitsbezogenen Schema, das erfordert, dass ein Benutzer ein Passwort eingibt, eingestellt wird, die Kommunikation basierend auf dem durch die Einstelleinrichtung eingestellten sicherheitsbezogenen Schema auszuführen.

6. AP nach einem der Ansprüche 1 bis 5, wobei der AP konfiguriert ist, kollektiv sicherheitsbezogene Schemata anzuzeigen, die nicht erfordern, dass ein Benutzer ein Passwort eingibt.

7. AP nach einem der Ansprüche 1 bis 6, wobei der AP in dem zweiten Schema eine Verschlüsselung basierend auf den Standards der Opportunistic Wireless Encryption, OWE, durchführt.

8. AP nach einem der Ansprüche 1 bis 7, wobei das zweite Schema Wi-Fi Enhanced Open ist.

9. Kommunikationsverfahren eines Zugangspunkts, AP, (102), der konfiguriert ist, Kommunikation auszuführen, und zwar unter Verwendung eines ersten Schemas, das ein Schema ist, das Kommunikation ohne Verschlüsselung unterstützt und nicht erfordert, dass ein Benutzer ein Passwort eingibt, oder eines zweiten Schemas, das ein sicherheitsbezogenes Schema ist, das eine Kommunikation mit Verschlüsselung unterstützt und nicht erfordert, dass ein Benutzer ein Passwort eingibt, wobei der AP in der Lage ist, in einem von mehreren Frequenzbändern zu arbeiten, wobei das Kommunikationsverfahren umfasst:
Vornehmen einer Einstellung, die sich auf eine Authentifizierung des AP bezieht, basierend auf einer Benutzereingabe;
Auswählen eines Frequenzbands, in dem der AP arbeiten soll, basierend auf einer Benutzereingabe; und
Durchführen einer Steuerung zum Einstellen des AP ohne Empfangen eines Auswahlvorgangs zwischen dem ersten Schema und dem zweiten Schema, sodass er eines von dem ersten Schema und dem zweiten Schema verwendet, und zwar basierend auf dem durch die Auswahl ausgewählten Frequenzband, falls beim Einstellen eine Einstellung vorgenommen wird, die nicht erfordert, dass ein Benutzer ein Passwort eingibt.

10. Programm zum Veranlassen eines Computers, als der AP nach einem der Ansprüche 1 bis 8 zu arbeiten.

11. Computerlesbares Speichermedium, das ein Programm nach Anspruch 10 speichert.

## Revendications

1. Point d'accès, AP, (102) configuré pour exécuter une communication à l'aide d'un premier schéma étant un schéma prenant en charge une communication sans chiffrement et ne nécessitant pas qu'un utilisateur saisisse un mot de passe ou d'un second schéma étant un schéma lié à la sécurité prenant en charge une communication avec chiffrement et ne nécessitant pas qu'un utilisateur saisisse un mot de passe, l'AP étant capable de fonctionner dans l'une quelconque de bandes de fréquences multiples, l'AP comprenant :
des moyens de réglage pour réaliser un réglage lié à l'authentification de l'AP sur la base d'une entrée utilisateur ;
des moyens de sélection pour sélectionner une bande de fréquences dans laquelle l'AP doit fonctionner sur la base d'une entrée utilisateur ; et
des moyens de commande pour, dans un cas où un réglage ne nécessitant qu'un utilisateur saisisse un mot de passe est réalisé par les moyens de réglage, régler, sans recevoir d'opération de sélection entre le premier schéma et le second schéma, l'AP pour utiliser le premier schéma ou le second schéma sur la base de la bande de fréquences sélectionnée par les moyens de sélection.

2. AP selon la revendication 1, dans lequel, dans un cas où le fonctionnement dans une première bande de fréquences est sélectionné par les moyens de sélection, les moyens de commande sont configurés pour régler l'AP pour utiliser le premier schéma et exécuter une fonction en tant qu'AP.

3. AP selon la revendication 1 ou 2, dans lequel, dans un cas où le fonctionnement dans une seconde bande de fréquences est sélectionné par les moyens de sélection, les moyens de commande sont configurés pour régler l'AP pour utiliser le second schéma et exécuter une fonction en tant qu'AP.

4. AP selon les revendications 2 et 3, dans lequel la première bande de fréquences est une bande de 2,4 gigahertz (GHz) ou une bande de 5 GHz, et la seconde bande de fréquences est une bande de 6 GHz.

5. AP selon l'une quelconque des revendications 1 à 4, dans lequel, dans un cas où l'opération dans un schéma lié à la sécurité nécessitant qu'un utilisateur saisisse un mot de passe est réglée par les moyens de réglage, l'AP est configuré pour exécuter la communication sur la base du schéma lié à la sécurité réglé par les moyens de réglage.

6. AP selon l'une quelconque des revendications 1 à 5, dans lequel l'AP est configuré pour afficher collectivement des schémas liés à la sécurité ne nécessitant pas qu'un utilisateur saisisse un mot de passe.

7. AP selon l'une quelconque des revendications 1 à 6, dans lequel, dans le second schéma, l'AP réalise un chiffrement sur la base de normes Opportunistic Wireless Encryption, OWE.

8. AP selon l'une quelconque des revendications 1 à 7, dans lequel le second schéma est Wi-Fi Enhanced Open.

9. Procédé de communication d'un point d'accès, AP, (102) configuré pour exécuter une communication à l'aide d'un premier schéma étant un schéma prenant en charge une communication sans chiffrement et ne nécessitant pas qu'un utilisateur saisisse un mot de passe ou d'un second schéma étant un schéma lié à la sécurité prenant en charge une communication avec chiffrement et ne nécessitant pas qu'un utilisateur saisisse un mot de passe, l'AP étant capable de fonctionner dans l'une quelconque de bandes de fréquences multiples, le procédé de communication comprenant :
la réalisation d'un réglage lié à l'authentification de l'AP sur la base d'une entrée utilisateur ;
la sélection d'une bande de fréquences dans laquelle l'AP doit fonctionner sur la base d'une entrée utilisateur ; et
la réalisation d'une commande pour, dans un cas où un réglage ne nécessitant pas qu'un utilisateur saisisse un mot de passe est réalisé dans le réglage, régler, sans recevoir d'opération de sélection entre le premier schéma et le second schéma, l'AP pour utiliser le premier schéma ou le second schéma sur la base de la bande de fréquences sélectionnée dans la sélection.

10. Programme pour amener un ordinateur à fonctionner comme l'AP selon l'une quelconque des revendications 1 à 8.

11. Support de stockage lisible par ordinateur portant un programme selon la revendication 10.
